# EUROPÄISCHE PATENTSCHRIFT

(11) **EP 3 835 242 B1**
(45) Veröffentlichungstag und Bekanntmachung des Hinweises auf die Patenterteilung: **16.11.2022**
(21) Anmeldenummer: 19215253.6
(22) Anmeldetag: 11.12.2019
(51) Int. Cl.: B65H 1/26, B65H 5/00, B65H 31/30, B66F 9/06

(54) **VERFAHREN ZUM BEWEGEN EINES STAPELS VON FLACHEN PRODUKTEN ZU EINER WEITERVERARBEITUNGSMASCHINE FÜR DIE PRODUKTE**
METHOD FOR MOVING A STACK OF FLAT PRODUCTS TO A PROCESSING MACHINE FOR THE PRODUCTS
PROCÉDÉ DE DÉPLACEMENT D'UN EMPILEMENT DE PRODUITS PLATS VERS UNE MACHINE DE TRANSFORMATION POUR LES PRODUITS

(43) Veröffentlichungstag der Anmeldung: 16.06.2021
(73) Patentinhaber: Heidelberger Druckmaschinen AG, 69115 Heidelberg (DE)
(72) Erfinder: Ackermann, Herbert, 71634 Ludwigsburg (DE); Angst, Uwe, 76751 Jockgrim (DE); Buck, Dr. Bernhard, 69126 Heidelberg (DE); Ganter, Udo, 71691 Freiberg am Neckar (DE); Haas, Claudius, 77790 Steinach (DE); Leva, Markus, 64285 Darmstadt (DE); Niggemann, Dr. Henning, 69221 Dossenheim (DE); Zeltner, Jürgen, 69493 Hirschberg (DE)

(56) Entgegenhaltungen:
- EP-A1- 0 683 127
- DE-A1-102014 209 205
- DE-A1-102017 202 749

## Beschreibung

### Erfindung

Die Erfindung betrifft ein Verfahren mit den Merkmalen des Oberbegriffs von Anspruch 1.

### Technisches Gebiet der Erfindung

Die Erfindung liegt auf dem technischen Gebiet der grafischen Industrie und dort insbesondere im Bereich des Transports von Stapeln aus zu verarbeitenden flachen Produkten, z.B. Bogen aus Papier, Karton, Pappe oder Folie, zu einer Maschine bzw. zu einem Stapelanleger oder zwischen zwei Maschinen bzw. zwischen einem Stapelausleger und einem Stapelanleger. Im Besonderen liegt die Erfindung dabei auf dem Teilgebiet des Transportierens der Stapel mit sogenannten fahrerlosen Tramsportfahrzeugen (FTF).

### Stand der Technik

FTF sind z.B. bereits aus dem Dokument DE102007046868A und der Einsatz von FTS in der grafischen Industrie aus den beiden Dokumenten DE102017215366A1 und DE102014209205A1bekannt.

Das seitliche Einfahren in Anleger ist aus Dokument DE10122430A1 bekannt; dort jedoch mit Rollenbahnen statt FTF.

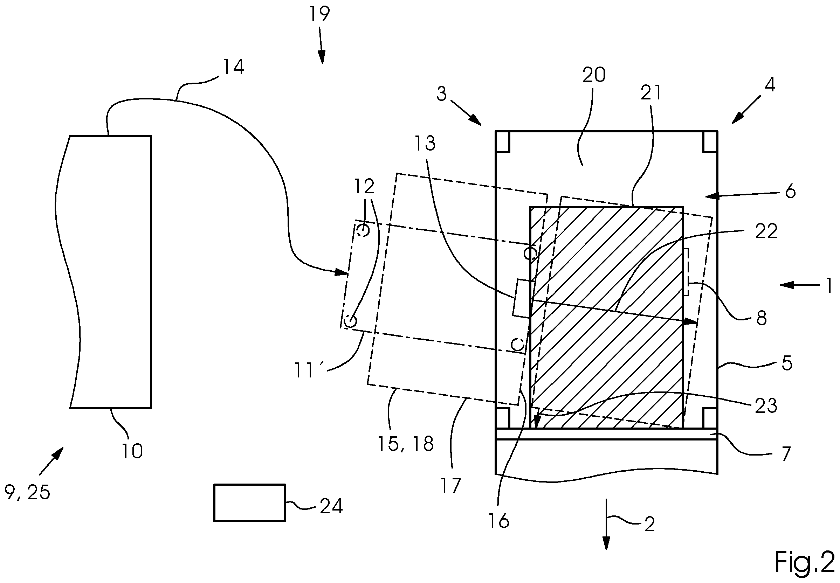

Es ist ferner bekannt, auf Paletten angeordnete Stapel aus zu falzenden Papierbogen etc. mittels eines Hubwagens von Hand zu einem Anleger einer Falzmaschine zu transportieren (vgl. die Figurenbeschreibung zu Figur 2). Dabei kann es erforderlich sein, dass der Hubwagen aufwändig und zeitraubend schräg in einem Anleger geschoben und dort verschenkt wird und dass es infolgedessen zu unbeabsichtigten Kollisionen und Beschädigungen des Stapels oder der Maschine kommen kann.

Die DE102017202749A1 offenbart ein gattungsgemäßes Verfahren zum Stapeln von flächigen Materialbogen.

Es ist daher eine Aufgabe der vorliegenden Erfindung, eine Verbesserung gegenüber dem Stand der Technik zu schaffen, welche es insbesondere ermöglicht, einen Stapel schnell, präzise und störungsfrei zu bewegen, insbesondere zu einem Anleger und in den Innenbereich eines Anlegers hinein.

### Erfindungsgemäße Lösung

Diese Aufgabe wird erfindungsgemäß durch ein Verfahren nach Anspruch 1 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Bewegen eines Stapels von flachen Produkten zu einer Weiterverarbeitungsmaschine für die Produkte, wobei der Stapel auf einer Palette angeordnet ist, an einer anderen Maschine oder an einem Lager von einem FTF abgeholt wird und mittels des FTF zu einem Anleger der Weiterverarbeitungsmaschine gefahren wird, wobei das FTF von einer Außenposition bis zu einer Endposition in den Anleger einfährt und dass dabei eine Schmalseite des Stapels parallel zu einem Anschlag des Anlegers ausgerichtet ist, und wobei das FTF von der Außenposition auf einer ersten Geraden bis zu einer Zwischenposition in den Anleger einfährt und das FTF von der Zwischenposition auf einer zweiten Geraden bis zu der Endposition weiterfährt, zeichnet sich dadurch aus, dass die zweite Gerade senkrecht zur ersten Geraden verläuft.

Die Erfindung ermöglichtes in vorteilhafter Weise, einen Stapel ohne Zutun eines Maschinenbedieners schnell, präzise und störungsfrei zu bewegen, insbesondere zu einem Anleger und in den Innenbereich eines Anlegers hinein. Unbeabsichtigte Kollisionen und Beschädigungen des Stapels oder der Maschine können zudem erfindungsgemäß in vorteilhafter Weise vermieden werden.

Beim erfindungsgemäßen Einfahren von einer Außenposition bis zu einer Endposition in den Anleger, wobei eine Schmalseite des Stapels parallel zu einem Anschlag des Anlegers ausgerichtet ist, wird ein unerwünschtes Drehen des FTF und somit des Stapels um eine Hochachse (senkrechte Achse zum Boden) vermieden.

Durch das Fahren auf der zweiten Geraden kann in vorteilhafter Weise sichergestellt werden, dass der Stapel präzise und störungsfrei an den Anschlag angefahren wird.

Unter FTF wird in dieser Anmeldung ein fahrerloses Transportfahrzeug verstanden (englisch: automated guided vehicle oder kurz AGV), also ein flurgebundenes Fördermittel mit bevorzugt eigenem Fahrantrieb, welches automatisch gesteuert werden kann. Dieses kann in ein FTS (fahrerloses Transportsystem) eingebunden sein, also in ein innerbetriebliches, flurgebundenes Fördersysteme mit bevorzugt mehreren automatisch gesteuerten Fahrzeugen, deren primäre Aufgabe der Transport von Produkten ist. Bodenschienen oder ähnliches brauchen nicht vorgesehen zu sein.

Das FTF kann eine Einrichtung zur Ortsbestimmung des FTF umfassen, z.B. ein GPS-Modul, ein ähnlich verwendbares aber nur innerbetrieblich arbeitendes, z.B. als Transponder ausgebildetes Modul und/oder ein Abstandssensor. Alternativ oder zusätzlich kann ein FTS eine Einrichtung zur Ortsbestimmung des FTF umfassen, z.B. eine Kamera oder eine Lasereinrichtung.

Die flachen Produkte sind bevorzugt Bogen aus Papier, Karton, Pappe, Folie oder Verbundmaterial. Die flachen Produkte sind bevorzugt im Wesentlichen rechteckig und bevorzugt ungefalzt. Die flachen Produkte können ein- oder mehrseitig bedruckt sein.

Die Palette kann eine Standardpalette oder eine maschinenspezifische Palette sein. Die Palette kann aus Holz oder Kunststoff sein. Das FTF ist bevorzugt derart ausgebildet, dass eine beladene Palette aufgenommen, angehoben, transportiert und abgesetzt werden kann.

Das FTF muss sich sowohl in der Zwischenposition als auch in der Endposition nicht vollständig im Innenbereich des Anlegers befinden; ein Teil des FTF kann außerhalb des Anlegers verbleiben. Der Stapel ist bevorzugt jedoch vollständig im Innenbereich des Anlegers; ebenso die Palette.

Das Abholen erfolgt bevorzugt durch Fahren zur anderen Maschine oder zum Lager, Aufnahme des Stapels und Fahren zur Weiterverarbeitungsmaschine, bevorzugt zu deren Anleger. Das Abholen erfolgt bevorzugt auf kürzester und/oder schnellster Strecke. Das FTF kann anschließend wieder zur anderen Maschine/Lager oder zu einer weiteren Maschine/Lager fahren und dort einen Stapel abholen. Das Lager kann als ein Lager mit nur einem oder einer Mehrzahl von Lagerorten für Stapel ausgebildet sein. Die Lagerorte können als Puffer genutzt werden.

Die Weiterverarbeitungsmaschine umfasst einen Anschlag. Eine Produkt-Einzugsrichtung der Weiterverarbeitungsmaschine kann definiert sein als eine Richtung senkrecht zu dem Anschlag.

Der Anschlag kann eine Längsrichtung aufweisen, z.B. eine Leiste mit einer Längsrichtung. Eine Produkt-Einzugsrichtung der Weiterverarbeitungsmaschine kann definiert sein als eine Richtung senkrecht zur Längsrichtung.

Der Anschlag kann eine vertikale Fläche aufweisen, z.B. eine Platte. Eine Produkt-Einzugsrichtung der Weiterverarbeitungsmaschine kann definiert sein als eine Richtung senkrecht zur Fläche.

Die Produkt-Einzugsrichtung kann parallel zur Längsseite der Maschine sein.

### Weiterbildungen der Erfindung

Eine bevorzugte Weiterbildung der Erfindung kann sich dadurch auszeichnen, dass das FTF im Innenbereich des Anlegers ausschließlich gerade Bewegungen und bevorzugt nur zwei gerade Bewegungen ausführt. Möglicherweise erforderliche Drehbewegungen des FTF werden bevorzugt außerhalb des Anlegers und bevorzugt vor der Einfahrt in den Anleger durchgeführt.

Eine bevorzugte Weiterbildung der Erfindung kann sich dadurch auszeichnen, dass das FTF den Stapel an einem Ausleger der anderen Maschine abholt. Das Abholen kann fahrend erfolgen. Das FTF kann in den Ausleger bzw. dessen Innenbereich einfahren, den Stapel dort aufnehmen und aus dem Innenbereich des Auslegers herausfahren.

Eine bevorzugte Weiterbildung der Erfindung kann sich dadurch auszeichnen, dass das Einfahren seitlich erfolgt, also von einer der beiden Längsseite des Anlegers, z.B. von der Bedienseite her, und nicht von dessen Stirnseite her in den Innenbereich des Anlegers.

Eine bevorzugte Weiterbildung der Erfindung kann sich dadurch auszeichnen, dass die Außenposition außerhalb des Anlegers an der Längsseite des Anlegers ist. Die Außenposition kann auf der Bedienseite des Anlegers sein. Die Außenposition kann direkt beim Anleger sein. Die Außenposition kann an den Anleger angrenzen. Die Außenposition ist bevorzugt näher am Anleger der Maschine als am Ausleger der anderen Maschine oder am Lager. Die Außenposition kann am Ende einer Transportstreclce zwischen den Maschinen sein. In der Außenposition kann das FTF stoppen.

Eine bevorzugte Weiterbildung der Erfindung kann sich dadurch auszeichnen, dass die erste Gerade senkrecht zu einer Produkt-Einzugsrichtung der Weiterverarbeitungsmaschine ist. Die Produkt-Einzugsrichtung kann parallel zur Längsseite der Maschine sein.

Eine bevorzugte Weiterbildung der Erfindung kann sich dadurch auszeichnen, dass während des Bewegens entlang der ersten Geraden eine Breitseite des Stapels parallel zur Produkt-Einzugsrichtung der Weiterverarbeitungsmaschine ist. Das Bewegen entlang der ersten Geraden kann bevorzugt mit der Breitseite des Stapels voraus erfolgen. Die Breitseite des Stapels kann die längere Seite der beiden Seiten des Stapels sein.

Eine bevorzugte Weiterbildung der Erfindung kann sich dadurch auszeichnen, dass das FTF in der Zwischenposition stoppt. Das Stoppen kann automatisch erfolgen. Das Stoppen kann gesteuert erfolgen. Das Stoppen kann unter Verwendung eines Sensors und/oder Transponders erfolgen, welcher absolute oder relative Ortsinformationen des FTF bereitstellt, z.B. ein Abstandssensor. Das Stoppen kann alternativ oder zusätzlich durch Anfahren eines Anschlags erfolgen.

Eine bevorzugte Weiterbildung der Erfindung kann sich dadurch auszeichnen, dass das FTF in der Zwischenposition eine Richtungsänderung vornimmt. Das FTF kann während der Richtungsänderung stillstehen. Das FTF kann während der Richtungsänderung seine Ausrichtung zum Anleger beibehalten.

Eine bevorzugte Weiterbildung der Erfindung kann sich dadurch auszeichnen, dass das FTF Räder aufweist und dass die Räder um 90° geschwenkt werden. Das Schwenken erfolgt bevorzugt um jeweilige vertikale Achsen (während das Drehen der Räder beim Bewegen des FTF bevorzugt um jeweilige horizontale Achsen erfolgt). Das Schwenken kann automatisch erfolgen. Das Schwenken kann gesteuert erfolgen. Das Schwenken kann durch einen gemeinsamen Schwenkantrieb für alle Räder oder durch jeweilige Schwenkantriebe erfolgen. Alternativ können Allseitenräder oder Mecanum-Räder zum Einsatz kommen.

Eine bevorzugte Weiterbildung der Erfindung kann sich dadurch auszeichnen, dass die zweite Gerade parallel zu der Produkt-Einzugsrichtung der Weiterverarbeitungsmaschine ist. Die Produkt-Einzugsrichtung kann parallel zur Längsseite der Maschine sein.

Eine bevorzugte Weiterbildung der Erfindung kann sich dadurch auszeichnen, dass während des Bewegens entlang der zweiten Geraden eine Schmalseite des Stapels senkrecht zur Produkt-Einzugsrichtung der Weiterverarbeitungsmaschine ist. Das Bewegen entlang der zweiten Geraden kann bevorzugt mit der Schmalseite des Stapels voraus erfolgen Die Schmalseite des Stapels kann die kürzere Seite der beiden Seiten des Stapels sein.

Eine bevorzugte Weiterbildung der Erfindung kann sich dadurch auszeichnen, dass die Endposition an einem Anschlag des Anlegers ist. Der Anschlag bzw. dessen Längsrichtung oder Fläche kann sich senkrecht zur Produkt-Einzugsrichtung der Weiterverarbeitungsmaschine erstrecken. Der Anschlag kann als eine Anschlagleiste oder - platte beim Einzug des Anlegers ausgebildet sein.

Eine bevorzugte Weiterbildung der Erfindung kann sich dadurch auszeichnen, dass das FTF auf der Strecke zwischen der anderen Maschine oder dem Lager und der Weiterverarbeitungsmaschine eine 180°-Drehung ausführt. Die Drehung kann um eine vertikale Achse erfolgen. Die Drehung kann an einer Stelle der Strecke, also während eines Stillstands des FTF, erfolgen. Die Drehung kann alternativ auf einer Teilstrecke der Strecke, also während des Fortbewegens, erfolgen. Die Drehung kann automatisch erfolgen. Die Drehung kann gesteuert erfolgen.

Eine bevorzugte Weiterbildung der Erfindung kann sich dadurch auszeichnen, dass ein Digitalrechner vorhanden ist und dass der Digitalrechner das Bewegen des FTF steuert. Das Steuern kann über eine Verbindung zum FTF erfolgen, bevorzugt eine drahtlose Verbindung. Es können Steuersignale und/oder Steuerdaten übertragen werden, welche die Fahrbewegungen und Richtungsänderungen starten und stoppen und/oder welche Richtungsänderungen bewirken. Alternativ können zum Steuern Ortsdaten von Positionen (Ausleger, Anleger, Positionen auf der Transportstrecke, Außenposition, Zwischenposition und/oder Endposition) übertragen werden und das FTF fährt unter Verwendung dieser Daten autonom.

Eine bevorzugte Weiterbildung der Erfindung kann sich dadurch auszeichnen, dass die Weiterverarbeitungsmaschine gestartet wird, wenn oder nachdem sich der Stapel in der Endposition befindet. Der Zustand "Stapel in der Endposition befindlich" kann mittels des FTF oder seines Sensors/Transponders oder eines Sensors der Maschine festgestellt werden. Zugehörige Daten können an die Maschinensteuerung der Maschine übertragen werden.

Eine bevorzugte Weiterbildung der Erfindung kann sich dadurch auszeichnen, dass die Weiterverarbeitungsmaschine eine Falzmaschine ist und dass die andere Maschine eine Bogendruckmaschine mit einem Ausleger ist. Beide Maschinen können in einem Maschinenverbund zusammengefasst sein und bevorzugt mit jeweiligen Auftragsdaten von einem gemeinsamen Digitalrechner versorgt werden. Die Bogendruckmaschine kann eine Offsetdruckmaschine oder eine Digitaldruckmaschine, z.B. eine Tintendruckmaschine, sein.

Die Merkmale der Erfindung, der Weiterbildungen der Erfindung und der Ausführungsbeispiele zur Erfindung stellen auch in beliebiger Kombination miteinander vorteilhafte Weiterbildungen der Erfindung dar. Weiterbildungen der Erfindung können zudem die - im obigen Abschnitt "Technisches Gebiet der Erfindung" offenbarten - Einzelmerkmale oder Merkmalskombinationen aufweisen.

### Ausführungsbeispiel zur Erfindung

Die Erfindung und deren bevorzugte Weiterbildungen werden nachfolgend unter Bezug auf die Zeichnungen anhand eines bevorzugten Ausführungsbeispiels näher beschrieben. Einander entsprechende Merkmale sind in den Figuren mit denselben Bezugszeichen versehen.

Die Zeichnungen zeigen:
- Figur 1: Die Erfindung; und
- Figur 2: Den Stand der Technik.

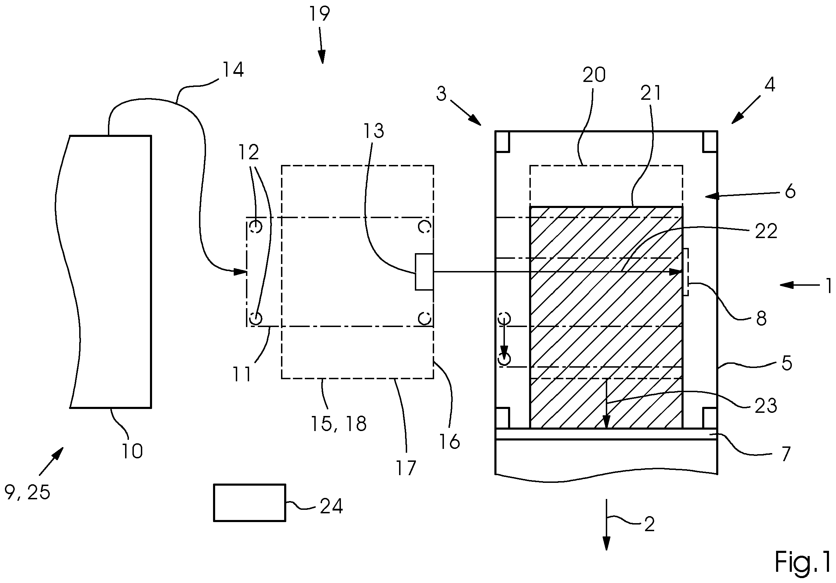

Figur 1 zeigt eine schematische Darstellung einer Vorrichtung in der Draufsicht bei der Durchführung einer bevorzugten Ausführungsform eines erfindungsgemäßen Verfahrens.

Gezeigt ist eine Weiterverarbeitungsmaschine 1, bevorzugt eine Falzmaschine, mit einer Produkt-Einzugsrichtung 2, einer Bedienseite 3 und einer Antriebsseite 4. Die Maschine umfasst einen Anleger 5, welcher von der Bedienseite her zugänglich ist, ggf. auch von der Stirnseite her. Die Zugänglichkeit von der Antriebsseite her kann durch Maschinenaggregate erschwert sein. Der Anleger verfügt über einen Innenbereich 6 zur Anordnung von Stapeln. Der Anleger umfasst einen Anschlag 7 und optional über einen weiteren Anschlag 8. Am Anschlag 7 werden Stapel mit einer ihrer Kanten angeordnet und flache Produkte, bevorzugt zu falzende Bogen, zur Weiterverarbeitung eingezogen. Die flachen Produkte können vor dem Einziehen optional seitlich ausgerichtet werden. Das Einziehen (nach dem optionalen Ausrichten) erfolgt in die Produkt-Einzugsrichtung 2, welche bevorzugt senkrecht zur Längsrichtung des Anschlags 7 liegt.

Gezeigt ist zudem eine weitere Maschine 9, bevorzugt eine Bogendruckmaschine. Die Maschine umfasst einen Ausleger 10.

Gezeigt ist ein (strichpunktiert dargestelltes) fahrerloses Transportfahrzeug 11 (kurz: FTF) mit schwenkbaren Rädern 12 und einem optionalen Sensor 13, bevorzugt einem Abstandssensor oder alternativ einem GPS-Modul, einem Transponder oder Ähnlichem. Das FTF fährt auf einer Transportstrecke 14 (von der anderen Maschine 9 oder von dem Lager 25) zur Weiterverarbeitungsmaschine 1 und bewegt bzw. transportiert dabei einen (gestrichelt dargestellten) Stapel 15 von flachen Produkten. Der Stapel hat eine Breitseite 16 und eine Schmalseite 17 und ist auf einer Palette 18 angeordnet.

Gezeigt ist eine Außenposition 19 außerhalb des Anleger 5 am Ende der Transportstrecke 14, in der das FTF 11 samt dem Stapel 15 zunächst positioniert ist. Von dieser Außenposition fährt das FTF auf einer ersten Geraden 22 bis zu einer Zwischenposition 20 in den Anleger 5 bzw. dessen Innenbereich 6 ein und stoppt dort. Das Stoppen kann durch den Sensor oder Transponder 13 bewirkt werden oder durch den optionalen weiteren Anschlag 8, bevorzugt im Zusammenwirken mit dem Sensor oder Transponder 13 bewirkt werden.

Aus dieser Zwischenposition fährt das FTF auf einer zweiten Geraden 23 bis zu einer Endposition 21 bzw. dem Anschlag 7. Die zweite Gerade verläuft senkrecht zur ersten Geraden, d.h. das FTF vollführt in der Zwischenposition eine 90°-Richtungsumkehr. Hierzu werden bevorzugt die Räder 12 um 90° geschwenkt, während das FTF und der Stapel ihre jeweiligen Ausrichtungen zum Anleger beibehalten.

Das FTF fährt somit von der Außenposition bis zur Endposition in den Anleger ein, wobei die Schmalseite des Stapels parallel zu dem Anschlag des Anlegers ausgerichtet ist.

Gezeigt ist schließlich ein Digitalrechner 24. Dieser steuert bevorzugt die Bewegungen des FTF 11.

Figur 2 zeigt eine schematische Darstellung des Standes der Technik in der Draufsicht.

Gezeigt sind eine Weiterverarbeitungsmaschine 1 und eine andere Maschine 9 oder ein Lager 25. Ein von einem Bediener geschobener Hubwagen 11' transportiert einen Stapel 15 auf einer Palette 18 entlang einer Transportstrecke 14 zwischen den Maschinen. Der Hubwagen wird von der Bedienseite 3 her schräg in einen Innenbereich 6 eines Anlegers 5 der Maschine 1 geschoben bis eine Ecke des Hubwagens an einem Anschlag 7 anstößt. Dann wird der Hubwagen vom Bediener geschwenkt bis eine Schmalseite 17 des Stapels an dem Anschlag anliegt.

### Bezugszeichenliste

- 1: Weiterverarbeitungsmaschine, z.B. Falzmaschine
- 2: Produkt-Einzugsrichtung
- 3: Bedienseite
- 4: Antriebsseite
- 5: Anleger
- 6: Innenbereich des Anlegers
- 7: Anschlag des Anlegers
- 8: Weiterer Anschlag
- 9: Andere Maschine, z.B. Bogendruckmaschine
- 10: Ausleger
- 11: FTF (fahrerloses Transportfahrzeug)
- 11': Hubwagen
- 12: Räder des FTF
- 13: Sensor und/oder Transponder
- 14: Transportstrecke zwischen den Maschinen
- 15: Stapel von flachen Produkten
- 16: Breitseite des Stapels
- 17: Schmalseite des Stapels
- 18: Palette
- 19: Außenposition
- 20: Zwischenposition
- 21: Endposition
- 22: Erste Gerade
- 23: Zweite Gerade
- 24: Digitalrechner
- 25: Lager

## Patentansprüche

1. Verfahren zum Bewegen eines Stapels von flachen Produkten zu einer Weiterverarbeitungsmaschine für die Produkte, wobei der Stapel (15) auf einer Palette (18) angeordnet ist, an einer anderen Maschine (9) oder an einem Lager (25) von einem FTF (11) abgeholt wird und mittels des FTF zu einem Anleger (5) der Weiterverarbeitungsmaschine (1) gefahren wird, wobei das FTF (11) von einer Außenposition (19) bis zu einer Endposition (21) in den Anleger (5) einfährt und dass dabei eine Schmalseite (17) des Stapels (15) parallel zu einem Anschlag (7) des Anlegers ausgerichtet ist, und wobei das FTF (11) von der Außenposition (19) auf einer ersten Geraden (22) bis zu einer Zwischenposition (20) in den Anleger (5) einfährt und das FTF von der Zwischenposition auf einer zweiten Geraden (23) bis zu der Endposition (21) weiterfährt,
**dadurch gekennzeichnet,**
**dass** die zweite Gerade (23) senkrecht zur ersten Geraden (22) verläuft.

2. Verfahren nach Anspruch 1,
**dadurch gekennzeichnet,**
**dass** die erste Gerade (22) senkrecht zu einer Produkt-Einzugsrichtung (2) der Weiterverarbeitungsmaschine (1) ist.

3. Verfahren nach einem der Ansprüche 1 oder 2,
**dadurch gekennzeichnet,**
**dass** während des Bewegens entlang der ersten Geraden (22) eine Breitseite (16) des Stapels (15) parallel zur Produkt-Einzugsrichtung (2) der Weiterverarbeitungsmaschine (1) ist.

4. Verfahren nach einem der vorgehenden Ansprüche,
**dadurch gekennzeichnet,**
**dass** das FTF (11) in der Zwischenposition (20) stoppt.

5. Verfahren nach Anspruch 4,
**dadurch gekennzeichnet,**
**dass** das FTF in der Zwischenposition eine Richtungsänderung vornimmt.

6. Verfahren nach Anspruch 5,
**dadurch gekennzeichnet,**
**dass** das FTF Räder aufweist und dass die Räder um 90° geschwenkt werden.

7. Verfahren nach einem der Ansprüche 2 bis 6,
**dadurch gekennzeichnet,**
**dass** die zweite Gerade (23) parallel zu der Produkt-Einzugsrichtung (2) der Weiterverarbeitungsmaschine (1) ist.

8. Verfahren nach Anspruch 7,
**dadurch gekennzeichnet,**
**dass** während des Bewegens entlang der zweiten Geraden (23) eine Schmalseite (17) des Stapels (15) senkrecht zur Produkt-Einzugsrichtung (2) der Weiterverarbeitungsmaschine (1) ist.

9. Verfahren nach einem der vorhergehenden Ansprüche,
**dadurch gekennzeichnet,**
**dass** die Endposition (21) an einem Anschlag (7) des Anlegers (5) ist.

10. Verfahren nach einem der vorhergehenden Ansprüche,
**dadurch gekennzeichnet,**
**dass** ein Digitalrechner (24) vorhanden ist und dass der Digitalrechner das Bewegen des FTF (11) steuert.

## Claims

1. Method of moving a stack of flat products to a machine for the further processing of the products, wherein the stack (15) is disposed on a pallet (18), collected at a different machine (9) or at a storage space (25) by an AGV (11), and moved to a feeder (5) of the machine (1) for further processing by the AGV, wherein the AGV (11) moves into the feeder (5) from an exterior position (19) to an end position (21) in such a way that a short side (17) of the stack (15) is aligned in parallel with a stop (7) of the feeder, and wherein the AGV (11) moves from the exterior position (19) into the feeder (5) on a first straight line (22) up to an intermediate position (20) and continues to move from the intermediate position to the end (21) position on a second straight line (23),
**characterized**
**in that** the second straight line (23) runs perpendicular to the first straight line (22).

2. Method according to claim 1,
**characterized**
**in that** the first straight line (22) is perpendicular to a product-feeding direction (2) of the machine (1) for further processing.

3. Method according to any one of claims 1 or 2,
**characterized**
**in that** during the movement along the first straight line (22), a long side (16) of the stack (15) is parallel to the product-feeding direction (2) of the machine (1) for further processing.

4. Method according to any one of the preceding claims,
**characterized**
**in that** the AGV (11) stops in the intermediate position (20).

5. Method according to claim 4,
**characterized**
**in that** the AGV changes direction in the intermediate position.

6. Method according to claim 5,
**characterized**
**in that** the AGV has wheels and the wheels are swivelled through 90°.

7. Method according to any one of claims 2 to 6,
**characterized**
**in that** the second straight line (23) is parallel to the product-feeding direction (2) of the machine (1) for further processing.

8. Method according to claim 7,
**characterized**
**in that** during the movement along the second straight line (23), a short side (17) of the stack (15) is perpendicular to the product-feeding direction (2) of the machine (1) for further processing.

9. Method according to any one of the preceding claims,
**characterized**
**in that** the end position (21) is at a stop (7) of the feeder (5).

10. Method according to any one of the preceding claims,
**characterized**
**in that** a digital computer (24) is provided and in that the digital computer controls the movement of the AGV (11).

## Revendications

1. Procédé pour déplacer une pile de produits plats vers une machine de post-traitement des produits, la pile (15) étant placée sur une palette (18), prélevée sur une autre machine (9) ou dans un entrepôt (25) par un véhicule autoguidé (11) et amenée au moyen du véhicule autoguidé vers un margeur (5) de la machine de post-traitement (1), pour lequel le véhicule autoguidé (11) entre dans le margeur (5) depuis une position extérieure (19) jusqu'à une position finale (21) et un petit côté (17) de la pile (15) est alors orienté parallèlement à une butée (7) du margeur, et pour lequel le véhicule autoguidé (11) entre dans le margeur (5) depuis la position extérieure (19) sur une première droite (22) jusqu'à une position intermédiaire (20), le véhicule autoguidé continuant à avancer depuis la position intermédiaire sur une deuxième droite (23) jusqu'à la position finale (21),
**caractérisé en ce**
**que** la deuxième droite (23) est perpendiculaire à la première droite (22).

2. Procédé selon la revendication 1,
**caractérisé en ce**
**que** la première droite (22) est perpendiculaire à un sens d'alimentation du produit (2) de la machine de post-traitement (1).

3. Procédé selon l'une des revendications 1 ou 2,
**caractérisé en ce**
**que**, pendant le déplacement le long de la première droite (22), un côté large (16) de la pile (15) est parallèle au sens d'alimentation du produit (2) de la machine de post-traitement (1).

4. Procédé selon l'une des revendications précédentes,
**caractérisé en ce**
**que** le véhicule autoguidé (11) s'arrête dans la position intermédiaire (20).

5. Procédé selon la revendication 4,
**caractérisé en ce**
**que** le véhicule autoguidé effectue un changement de direction dans la position intermédiaire.

6. Procédé selon la revendication 5,
**caractérisé en ce**
**que** le véhicule autoguidé possède des roues et que les roues sont pivotées de 90°.

7. Procédé selon l'une des revendications 2 à 6,
**caractérisé en ce**
**que** la deuxième droite (22) est perpendiculaire à un sens d'alimentation de produit (2) de la machine de post-traitement (1).

8. Procédé selon la revendication 7,
**caractérisé en ce**
**que**, pendant le déplacement le long de la deuxième droite (23), un petit côté (17) de la pile (15) est perpendiculaire au sens d'alimentation du produit (2) de la machine de post-traitement (1).

9. Procédé selon l'une des revendications précédentes,
**caractérisé en ce**
**que** la position finale (21) se situe sur une butée (7) du margeur (5).

10. Procédé selon l'une des revendications précédentes,
**caractérisé en ce**
**qu'**il existe un ordinateur numérique (24) et **en ce que** l'ordinateur numérique commande le déplacement du véhicule autoguidé (11).
